# EUROPEAN PATENT APPLICATION

(11) **EP 3 051 283 A1**
(43) Date of publication of application: **03.08.2016**
(21) Application number: 16151073.0
(22) Date of filing: 13.01.2016
(51) Int. Cl.: G01N 29/07

(54) **STRUCTURAL DEFORMATION DETECTING DEVICE**

(30) Priority: 14.01.2015 JP 2015004959
(71) Applicant: Toshiba TEC Kabushiki Kaisha, Tokyo 141-0032 (JP)
(72) Inventor: KOMIYA, Kenichi, Shinagawa-ku, Tokyo 141-0032 (JP); ISHIKAWA, Daisuke, Shinagawa-ku, Tokyo 141-0032 (JP)
(74) Representative: Takeuchi, Maya

(57) **Abstract**

A structural deformation detecting device (10) comprises a vibration section (1) configured to vibrate a specific vibration position on a measured structure in a non-contact manner, a first vibration measurement section (2) configured to detect the vibration generated in the measured object from any position in a non-contact manner, a housing (3) on which the vibration section and the vibration measurement section are arranged at a specific interval (LO), and a time measurement section configured to measure the time elapsing till the vibration of the measured object caused by the vibration section is detected by the first vibration measurement section.

## Description

### FIELD

Embodiments described herein relate generally to a technology for detecting the deformation (crack, crackle and internal defect) of a structure such as a bridge or tunnel in a non-contact manner.

### BACKGROUND

A detecting device (see Japanese Unexamined Patent Application Publication No. Hei 8-248006) has been provided to detect the deformation, for example, the crackle, of a structure such as a bridge or tunnel in a non-contact manner.

The non-contact structural deformation detecting device disclosed in Japanese Unexamined Patent Application Publication No. Hei 8-248006 comprises a non-contact vibration section configured to vibrate an inspected structure (hereinafter referred to as a measured object) by applying ultrasonic waves oscillated by an ultrasonic oscillator to the inspected structure and a vibration measurement section configured to measure, using a laser Doppler Vibrometer, the vibration of the measured object vibrated by the vibration section.

The vibration section of the structural deformation detecting device which is arranged far away from the measured object oscillates ultrasonic wave towards a detection point on the surface of the measured object or a specific area containing the detection point, thereby vibrating the measured object in a non-contact manner. Further, the vibration measurement section which is also arranged far away from the measured object emits laser beam towards a deformation detection point on the measured object being vibrated, receives the light reflected from the deformation detection point and measures the vibration of the deformation detection point according to the reflected light received to detect whether or not there is a deformation at the deformation detection point.

As a method for detecting whether or not there is a deformation at the deformation detection point, a distance between the vibration point on the measured object and the irradiation point of the laser beams emitted from the vibration measurement section is set as the specific distance. Whether or not there is a deformation at the deformation detection point is determined according to whether or not the time taken for the transmission of the vibration for the specific distance is different from a specific time.

However, as the vibration section and the vibration measurement section are independent devices which set an ultrasonic wave irradiation position and a laser beam irradiation position independently for the measured object, it is needed to carry out an adjustment processing to keep a fixed position relationship between the laser beam irradiation position and the ultrasonic wave irradiation position when a measurement point is changed.

Further, it is assumed that the vibration section and the vibration measurement section are both large devices for a long-distance high-precision measurement.

To achieve the above end, there is provided a structural deformation detecting device, comprising:
a housing comprising a vibration section and a vibration measurement section that are arranged at a specific interval, the vibration measurement section comprising at least a first vibration measurement section;
the vibration section being configured to vibrate a specific vibration position on a structure serving as an object to be measured in a non-contact manner;
the first vibration measurement section being configured to detect the vibration generated in the object to be measured from any position in a non-contact manner; and
a time measurement section configured to measure the time elapsing till the vibration of the object to be measured caused by the vibration section is detected by the first vibration measurement section.

Preferably, the structural deformation detecting device further comprises:
a second vibration measurement section configured to detect the generation of vibration by the vibration section at a specific vibration position on a structure in a non-contact manner, wherein
the time measurement section starts measuring time when the vibration is detected by the second vibration measurement section and stops measuring time if the vibration is detected by the first vibration measurement section.

Preferably still, the second vibration measurement section has a center of the vibration measurement point thereof and the vibration section has a vibration center thereof, and the center of the vibration measurement point of the second vibration measurement section is configured to be arranged on the same axial line with the vibration center of the vibration section.

Preferably yet, the second vibration measurement section is configured to be moved between a first position coincident with the vibration point of the vibration section and a second position spaced from the first position by a specific distance, and if the vibration measurement point is at the second position, the second vibration measurement section is configured to detect the vibration at the vibration point to measure a reference vibration transmission time.

Suitably, the at least a first vibration measurement section comprises a laser Doppler vibrometer.

The invention also relates to a method for detecting a deformation of a structure, comprising the steps of:
- providing a housing comprising a vibration section and a vibration measurement section that are arranged at a specific interval, the vibration measurement section comprising at least a first vibration measurement section;
- vibrating, by the vibration section, a specific vibration position on a structure serving as an object to be measured in a non-contact manner;
- detecting the vibration generated in the object to be measured from any position in a non-contact manner by the first vibration measurement section; and
- measuring the time elapsing till the vibration of the object to be measured caused by the vibration section is detected by the first vibration measurement section.

Preferably, the method further comprises the step of:
- providing a second vibration measurement section;
- detecting, by the second vibration measurement section, the generation of vibration by the vibration section at a specific vibration position on a structure in a non-contact manner, wherein
- starting measuring time when the vibration is detected by the second vibration measurement section; and
- stopping measuring time if the vibration is detected by the first vibration measurement section.

Preferably still, the method further comprises the step of:
- defining a center of the vibration measurement point of the second vibration measurement section and a vibration center of the vibration section; and
- arranging the center of the vibration measurement point of the second vibration measurement section on the same axial line with the vibration center of the vibration section.

Preferably yet, the method further comprises the step of:
- moving the second vibration measurement section between a first position coincident with the vibration point of the vibration section and a second position spaced from the first position by a specific distance, and
- detecting, the second vibration measurement section, the vibration at the vibration point to measure a reference vibration transmission time, if the vibration measurement point is at the second position.

Typically, the step of providing the first vibration measurement section comprised in the housing comprises providing a laser Doppler vibrometer.

The invention is further concerned with the use of the structural deformation detecting device as defined above, for detecting a deformation in a structure in a non-contact manner.

Suitably, the structure has a surface made of concrete.

### DESCRIPTION OF THE DRAWINGS

The above and other objects, features and advantages of the present invention will be made apparent from the following description of the preferred embodiments, given as non-limiting examples, with reference to the drawings, in which:
Fig. 1 is a schematic front view of a structural deformation detecting device according to a first embodiment;
Fig. 2 is a diagram illustrating the structure of the parametric speaker of a vibration section shown in Fig. 1;
Fig. 3 is a diagram illustrating a state in which a structure is not deformed in a cross-sectional side view of the structural deformation detecting device shown in Fig. 1;
Fig. 4 is a diagram illustrating a state in which a structure is deformed in a cross-sectional side view of the structural deformation detecting device shown in Fig. 1;
Fig. 5 is a flowchart illustrating the basic procedures of the detection operation of the structural deformation detecting device shown in Fig. 1;
Fig. 6 is a diagram illustrating the control circuit of the parametric speaker of the vibration section shown in Fig. 1;
Fig. 7 is a diagram illustrating the circuit of a two-dimensional scanning laser Doppler vibrometer constituting the vibration measurement section shown in Fig. 1;
Fig. 8 is a diagram illustrating the system configuration of the structural deformation detecting device shown in Fig. 1;
Fig. 9 is a diagram illustrating the scanning operation of the structural deformation detecting device shown in Fig. 1;
Fig. 10 is a flowchart illustrating the procedures of a measurement operation of reference time serving as a reference for a deformation detection operation executed by the structural deformation detecting device shown in Fig. 1;
Fig. 11 is a schematic front view of a structural deformation detecting device according to a second embodiment;
Fig. 12 is a diagram illustrating a state in which a structure is deformed in a cross-sectional side view of the structural deformation detecting device shown in Fig. 11;
Fig. 13 is a diagram illustrating the circuit of a self-mixing interferometry based laser Doppler vibrometer constituting the vibration measurement section shown in Fig. 11;
Fig. 14 is a diagram illustrating the system configuration of the structural deformation detecting device according to the second embodiment;
Fig. 15 is a timing diagram illustrating operation of a deformation detection according to the second embodiment;
Fig. 16 is a schematic front view of a structural deformation detecting device according to a third embodiment;
Fig. 17 illustrates a state in which a structure is deformed in a cross-sectional side view of the structural deformation detecting device shown in Fig. 16;
Fig. 18 is a diagram illustrating a system configuration of a structural deformation detecting device according to the third embodiment; and
Fig. 19 is a flowchart illustrating the flow of the detection operation of the structural deformation detecting device shown in Fig. 16.

### DETAILED DESCRIPTION

In accordance with an embodiment, a structural deformation detecting device comprises a vibration section configured to vibrate a specific vibration position on a structure serving as a measured object in a non-contact manner, a first vibration measurement section configured to detect the vibration generated in the measured object at any position in a non-contact manner, a housing on which the vibration section and the vibration measurement section are arranged at a specific interval, and a time measurement section configured to measure the time elapsing till the vibration of the measured object caused by the vibration section is detected by the first vibration measurement section.

Embodiments are described below with reference to accompanying drawings.

### (First Embodiment)

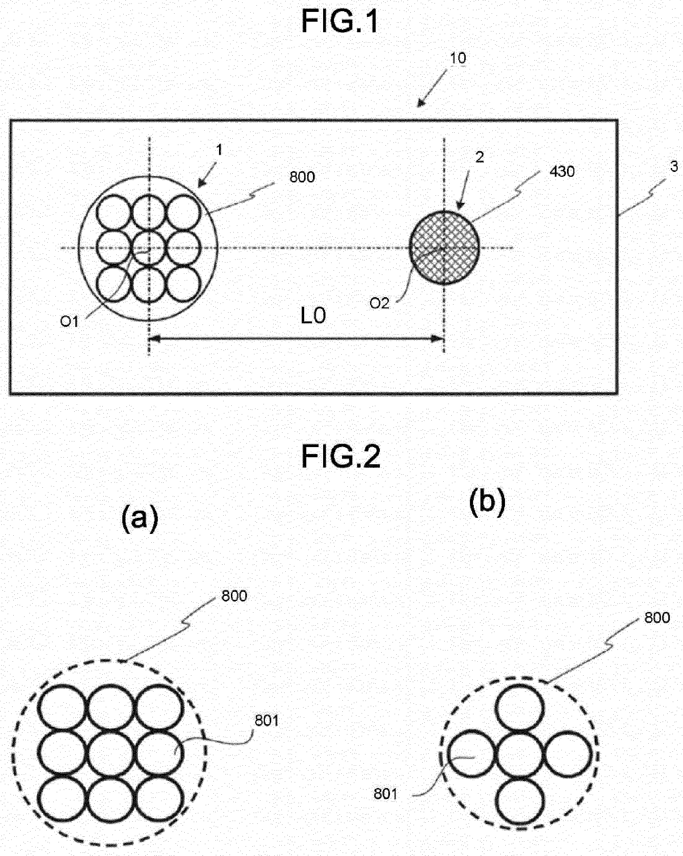

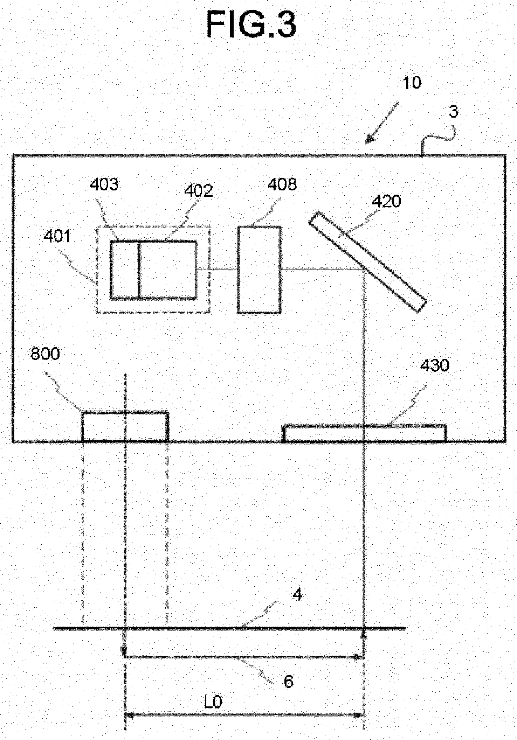

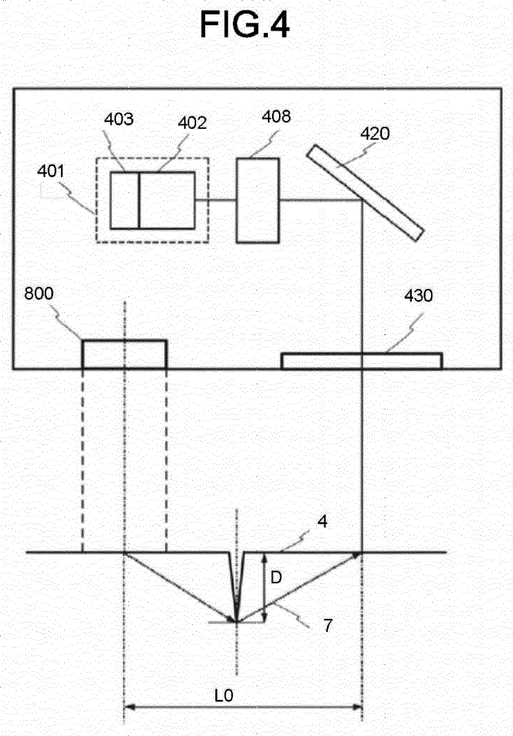

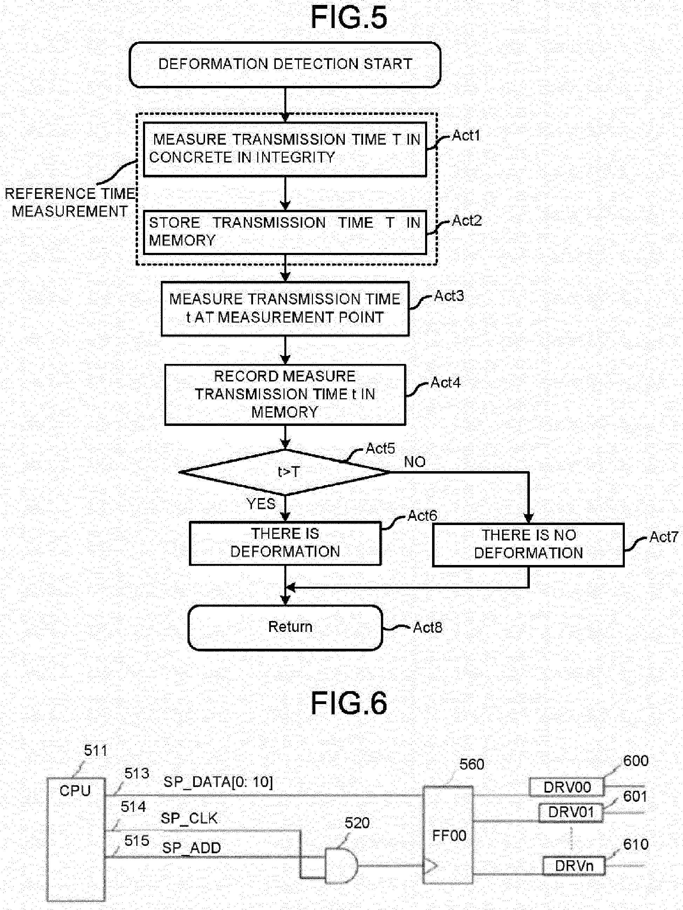

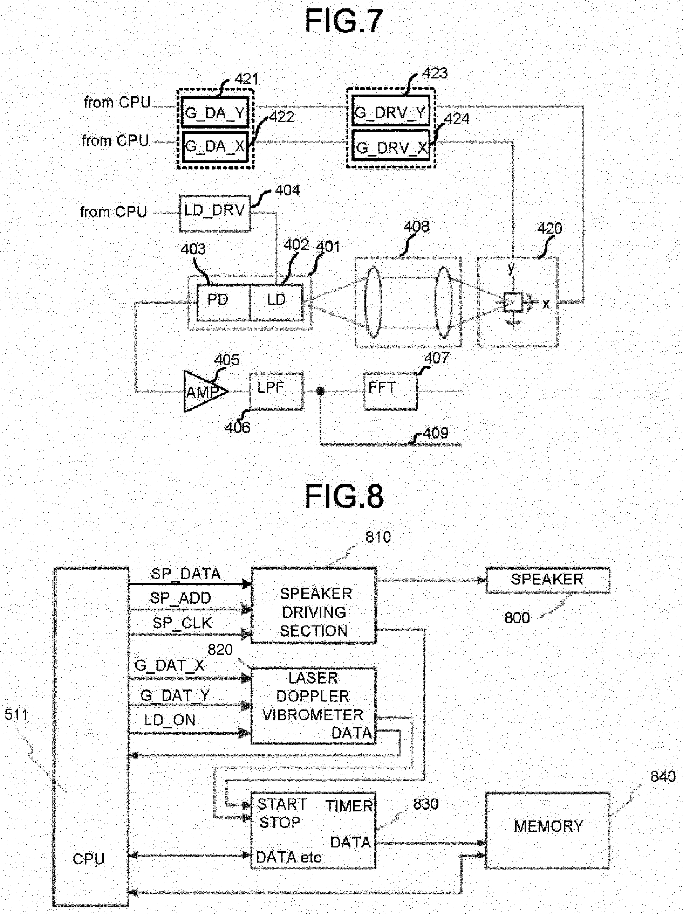

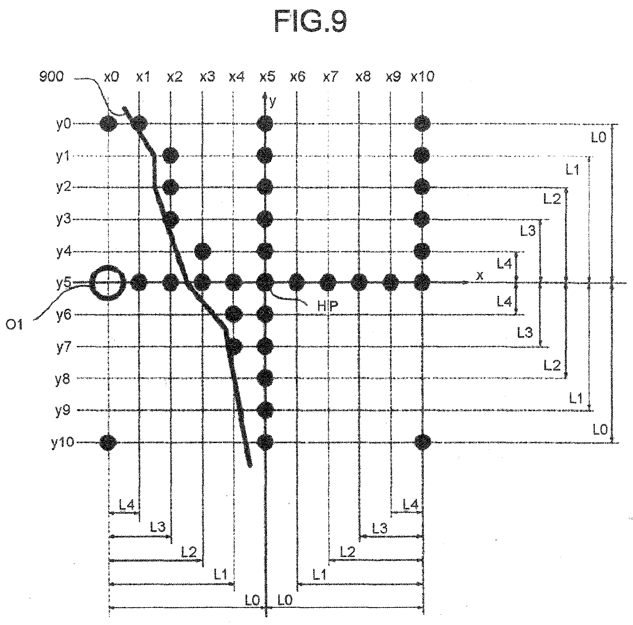

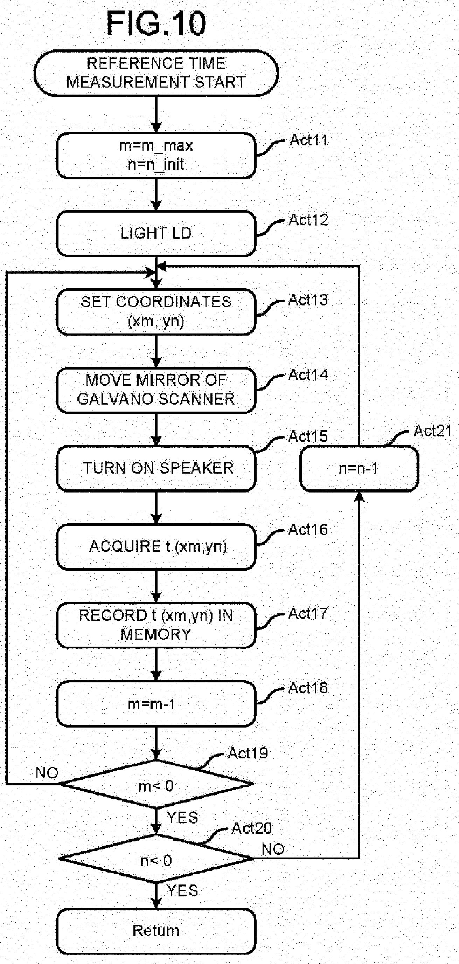

Fig. 1 is a schematic front view of a structural deformation detecting device according to the first embodiment; Fig. 2(a) and Fig. 2(b) are diagrams illustrating the structure of the parametric speaker of the vibration section shown in Fig. 1; and Fig. 3 illustrates a state in which a structure is not deformed in a cross-sectional side view of the structural deformation detecting device shown in Fig. 1. Fig. 4 illustrates a state in which a structure is deformed in a cross-sectional side view of the structural deformation detecting device shown in Fig. 1. Fig. 5 is a flowchart illustrating the basic flow of the detection operation of the structural deformation detecting device shown in Fig. 1; Fig. 6 is a diagram illustrating the control circuit of the parametric speaker of the vibration section shown in Fig. 1; Fig. 7 is a diagram illustrating the circuit of a two-dimensional scanning laser Doppler vibrometer constituting the vibration measurement section shown in Fig. 1; Fig. 8 is a diagram illustrating the system configuration of the structural deformation detecting device shown in Fig. 1. Fig. 9 is a diagram illustrating the scanning operation of the structural deformation detecting device shown in Fig. 1; and Fig. 10 is a flowchart illustrating the procedures of a measurement operation of reference time serving as a reference for a deformation detection operation executed the structural deformation detecting device shown in Fig. 1.

As shown in Fig. 1, the structural deformation detecting device 10 comprises a vibration section 1 provided with a speaker 800 and a vibration measurement section 2 having a lens section 430 on the front surface thereof. The vibration section 1 and the vibration measurement section 2 are arranged on the housing 3 in such a manner that the axis of the acoustic waves output from the vibration section 1 in the output direction of the acoustic waves is oriented towards the same direction (the front) as the axis of the laser beam output from the vibration measurement section 2. If the output center of the acoustic waves output from the vibration section 1 is set as O1 and the emitting center of the laser beam output from the vibration measurement section 2 is set as 02, then the vibration section 1 and the vibration measurement section 2 are fixed on and integrated with the housing 3 with the distance between the output center O1 and the emitting center 02 set as a specific interval L0.

As shown in Fig. 3, the structural deformation detecting device 10 is arranged opposite to a measured object 4 made of concrete or mortar and spaced from the measured object 4 by a specific set distance to measure the vibration of a measurement point in a non-contact manner.

The set distance is set in consideration of the focal length of a laser Doppler vibrometer constituting the vibration measurement section 2 or the distance reachable to the acoustic waves output from the vibration section 1. In the present embodiment, it is assumed that the small structural deformation detecting device can be carried by an operator, thus, the set distance is set to about m meters.

In Fig. 1, the speaker 800 of the vibration section 1 may be, for example, a parametric speaker, a flat speaker, a loudspeaker, a gas gun, a shock tube or any device that can vibrate a measured object in a non-contact manner. A parametric speaker 800 is described below as an example of the speaker of vibration section 1 in the present embodiment.

On the other hand, the vibration measurement section 2 consists of a two-dimensional laser Doppler vibrometer, and a lens section 430 which is an incident port and emitting port for the laser beam emitted from the two-dimensional laser Doppler vibrometer and arranged on the front surface of the housing 3.

As the structure of the parametric speaker 800, a plurality of transducers 801 (e.g. ultrasonic piezoelectric elements) are arranged in a plane, as shown in Fig. 2(a) and Fig. 2(b). Each transducer 801 has a directivity of about 60-70 degrees or higher if a plurality of transducers 801 are structured as shown in Fig. 2(a). Thus, the ultrasonic waves emitted from the parametric speaker 800 substantially linearly irradiate the measured object 4 with a directivity of certain angles (Fig. 3). That is, the center part of the parametric speaker 800 is substantially coincident with the center part O1 of the ultrasonic waves emitted from the parametric speaker 800.

On the other hand, in the present embodiment, the two-dimensional scanning laser Doppler vibrometer is a self-mixing interferometry based laser Doppler vibrometer. The Self-mixing interferometry refers to a method for measuring the motion (vibration) of a measured object by making a laser beam output from a laser interfere with the scattered light received from a vibrating measured object inside the laser. That is, with the use of self-mixing interferometry, the vibration of a measured object being irradiated with laser beams can be measured.

The vibration section 1 irradiates the measured object 4 made of concrete or mortar with ultrasonic waves to vibrate the measured object 4. The ultrasonic vibration generated in the measured object 4 by irradiating the measured object 4 with ultrasonic waves (applying ultrasonic waves to the measured object 4) is transmitted in the surface of the measured object 4 and detected by the laser Doppler vibrometer at a measurement point being irradiated with the laser beams from the laser Doppler vibrometer.

It is assumed that the surface of the measured object 4 is concrete. A vibration wave 6 of the ultrasonic vibration generated by irradiating the measured object 4 with the ultrasonic wave emitted from the vibration section 1 is transmitted in the concrete surface directly (for the shortest distance). The time T (transmission time) elapsing till the vibration wave 6 is detected by the laser Doppler vibrometer is measured and recorded in a memory in advance. The time T indicates the time taken for the transmission of ultrasonic wave for a distance L0 (shown in Fig. 3) in concrete in integrity that is not subjected to deformation such as crack, crackle, bump or peeling.

On the other hand, Fig. 4 illustrates a case where a measured object is cracked concrete. In this case, the ultrasonic vibration 7 generated in the measured object 4 which cannot be transmitted to the crack part is transmitted circuitously to the top in the depth D direction of the crack and finally reaches the measurement point of the laser Doppler vibrometer.

That is, if the concrete is cracked, crackled or peeled, then ultrasonic wave cannot be transmitted in the surface of the concrete and is consequentially transmitted for a longer distance. As the ultrasonic wave is transmitted through concrete at a substantially fixed speed, the time measured by the laser Doppler vibrometer concerning the transmission of ultrasonic wave through cracked, crackled or peeled concrete is longer than that concerning the transmission of ultrasonic wave in concrete in integrity. It is assumed that the time taken for the transmission of ultrasonic wave to a measurement point is set to t.

That is, the transmission time T (calibration) taken for the transmission of ultrasonic wave to a measurement point on concrete in integrity is measured and recorded in advance, and if the transmission time t taken for the transmission of ultrasonic wave in a measured object is longer than the transmission time T, then it can be determined that the measured object is deformed (e.g. cracked, crackled or peeled).

In Fig. 3, the laser Doppler vibrometer concentrates the laser beams output from a semiconductor laser 402 of a laser section 401 on the measured object 4 through an optical unit 408. The concentrated laser beams are reflected by the measured object 4, the scattered light is interfered with the laser beams inside the semiconductor laser 402 through an optical path and then the interfered light is measured by a photodiode 403 arranged inside the laser section 401.

In Fig. 3, if the ultrasonic vibration 6 generated in the measured object 4 is vibrated towards the advancing direction indicated by an arrow, then a Doppler shift occurs, and the frequency of the scattered light is slightly changed. The scattered light is interfered with the original light (back beams) inside the laser section 401 and the interfered light is detected by the internal photodiode 403. If the interference is generated on the photodiode 403, then the frequency difference is detected as a beat signal.

A deformation detection flow is described below according to the flowchart shown in Fig. 5.

In Act 1, the surface of concrete in integrity is irradiated with ultrasonic waves emitted from the vibration section 1 which is spaced from concrete by a distance L0 and simultaneously with the laser beams emitted from the vibration measurement section 2. The time (transmission time T) elapsing from the moment the surface of concrete in integrity is irradiated with ultrasonic waves to the moment the vibration of concrete in integrity is detected by the vibration detection section 2 is measured, then Act 2 is taken.

In Act 2, the transmission time T is stored in a memory as a reference transmission time, and then Act 3 is taken. The processing in Act 1 and the processing in Act 2 constitute a reference time measurement processing.

In Act 3, a transmission time t is measured by detecting vibration from the moment the vibration is started in a measurement point irradiated with the laser beams emitted from the vibration measurement section 2, then Act 4 is taken.

In Act 4, the transmission time t is stored in the memory, then Act 5 is taken.

In Act 5, the reference transmission time T is compared with the measured transmission time t. Act 6 is taken if the measured transmission time t is longer than the reference transmission time T (t>T) or Act 7 is taken if the measured transmission time t is shorter than the reference transmission time T (t<T).

In Act 6, as the measured object is in the state shown in Fig. 4 in a case of t is greater than T, then it is determined that the measured object is deformed, and Act 8 is taken to return to an initial state.

In Act 7, as the measured object is in the state shown in Fig. 3 in a case of t is shorter than T, thus, it is determined that the measured object is not deformed, and Act 8 is taken.

Next, the control circuit of the parametric speaker 800 serving as the vibration section 1 is described below with reference to Fig. 6.

As the parametric speaker 800 is formed by arranging a plurality of transducers 801 in a plane, drive circuit sections (DRV00, DRV01, ... DRVn) 600, 601 ... 610 are as many as transducers 801. For example, nine drive circuit sections (DRV00-DRV08) are needed in the case of the parametric speaker 800 shown in Fig. 2(a) which consists of nine transducers 801.

A CPU 511 for controlling the whole parametric speaker 800 can drive any transducer 801 by using a data line 513, an address line 515 for designating a transducer 801 and a clock line 514. In this example, the nine transducers 801 are all driven. If a clock signal from the clock line 514 and an address signal from the address line 515 are both input for an AND circuit 520, then a signal '1' is output to FF00 of a flip-flop circuit 560. The flip-flop circuit 560 outputs the signal '1' from each output terminal thereof so that the drive circuit sections (DRV00-DRV08) are driven simultaneously.

The detailed structure of the two-dimensional laser Doppler vibrometer is described below with reference to Fig. 7.

If it is assumed that the measured surface of the measured object 4 is an X-Y plane consisting of the X axis and the Y axis orthogonal to the X axis, then the two-dimensional laser Doppler vibrometer can irradiate any measurement point in the X-Y plane with laser beams.

In the present embodiment, a Galvano scanner 420 capable of rotating around the X axis and the Y axis is irradiated with laser beams, and the light reflected from the measured object is received by the laser section 401 via the Galvano scanner 420 and the optical unit 408.

The photodiode 403 for a power monitor is arranged inside the laser section 401. The semiconductor laser 402 is driven by a current driver 404 with a constant current. The output from the photodiode 403 is converted and amplified by a current-voltage conversion amplifier 405 and then filtered by a low-pass filter to cut off noise of high-frequency component. The signal 409, which is a beat signal, is monitored to determine whether or not a Doppler shift occurs. Further, Fourier transformation is conducted using FFT 407 to obtain a power spectrum of laser intensity.

The reason why this method is selected is that the method needs no reference light, which is unlike the conventional optical heterodyne detection method, thus structurally simplifying a constitution of the optional system, lowering cost and achieving a small device.

The Galvano scanner 420 is a two-dimensional scanning module which scans with laser beams for measuring. The laser beams for measuring are concentrated towards the surface of the reflecting mirror of the Galvano scanner 420 through the optical unit 408. If the mirror is rotated around the vertical axis (the Y axis) shown in Fig. 7, then a scan processing is carried out along the X-axis direction with laser beams, if the mirror is rotated around the horizontal axis (the X axis) shown in Fig. 7, then a scan processing is carried out along the Y-axis direction with laser beams. Through the operation, the laser beams for measuring can be freely shifted to any position determined by a coordinate in the X-axis direction and a coordinate in the Y-axis direction shown in Fig. 9.

The mirror of the Galvano scanner 420 is rotationally driven around the X axis by an X-axis actuator (not shown) for realizing the driving around the X axis or around the Y axis by a Y-axis actuator (not shown) for realizing the driving around the Y axis. If the CPU 511 generates a coordinate (X, Y) instruction for determining a measurement point, then drive signals are separately output from a Y-axis coordinate data section 421 and an X-axis coordinate data section 422 to a Y-axis driver 423 and an X-axis driver 424. The Y-axis actuator and the X-axis actuator are driven. As a result, the measurement point is irradiated with laser beams.

The structure of system of the structural deformation detecting device is described below with reference to the circuit diagram shown in Fig. 8. Detailed components of the structural deformation detecting device which are already described above with reference to Fig. 6 and Fig. 7 are not described repeatedly.

According to the structure of system of the structural deformation detecting device, the CPU 511 drives a speaker driving section 810 to output ultrasonic waves from the parametric speaker 800. The speaker driving section 810 outputs a drive signal to the start terminal of a timer 830.

On the other hand, the CPU 511 drives a laser Doppler vibrometer 820 to output a data signal indicating a measurement result to the stop terminal of the timer 830 and the CPU 511.

If a speaker drive signal is input to the start terminal, then the timer 830 is started, if a data signal indicating a measurement result obtained from the laser Doppler vibrometer 820 is input, then the timer 830 is stopped. Further, the data indicating a measurement result is recorded in a memory 840.

In this case, the number of the irradiation points of ultrasonic wave which is emitted towards the the measured object 4 by the parametric speaker 800 is one. Contrarily, the Galvano scanner 420 of the laser Doppler vibrometer 820 irradiates any measurement point indicated by X-Y coordinates, for example, at measurement points set into a matrix shape with laser beams to detect vibration.

Fig. 9 is a schematic diagram illustrating a method used by the structural deformation detecting device to detect a deformation such as a crack.

A position irradiated with the ultrasonic waves output from the parametric speaker 800 of the vibration section 1 is indicated by o. On the other hand, a position irradiated with the laser beams emitted from the vibration measurement section 2 is indicated by ●. The vibration measurement section 2 is the two-dimensional scanning laser Doppler vibrometer 820 described with reference to Fig. 8. The intersection point of the X axis and the Y axis located in the center position of Fig. 9 is set as a home position (HP). The laser beams for measuring can be freely moved to any position on the measured object by designating coordinates (x, y). In Fig. 9, the points on the X axis and the Y axis irradiated with the laser beams for measuring are separately indicated by an image ●. The coordinate intervals (L0-L4) between the points x0-x10 on the X axis are equal. The coordinate intervals (L0-L4) between the points y0-y10 on the Y axis are equal. For example, the linear distance between the point O1 and the measurement point (x5, y4) is equal to the positive square root of the sum of L0² and L4².

By freely shifting the measurement position of the vibration measurement section 2 to any position on the measured object 4, a crack among the position vibrated by the vibration section 1, a vibration measurement module and a vibration measurement position can be detected. That is, the under-mentioned extension of a crack can be detected.

Fig. 9 is a diagram illustrating the appearance of a crack 900 generated on the lining part of a tunnel made of concrete detected by the structural deformation detecting device 10. A crack, as an example of deformation, does not always extend linearly but extends while heading a continuously changing direction in some cases. Further, a crack can be visually confirmed in some cases but cannot be visually confirmed in other cases. For the sake of convenience, a crack which can be detected by the structural deformation detecting device described herein but cannot be confirmed visually is presented by a thick black line in Fig. 9.

Fig. 9 is a diagram illustrating the images formed by projecting vibration points of the vibration section 1 and laser beam irradiation points of the vibration measurement section 2 on the lining part of a tunnel. For example, the coordinates (x0, y5) indicate a position irradiated with the ultrasonic waves which are output from the parametric speaker 800 of the vibration section 1 and which are projected at the position.

Similarly, the coordinates (x5, y5) indicate the home position (HP) of a laser Doppler vibrometer serving as a vibration measurement module, wherein the home position is the position irradiated with laser beams for measuring (distance is L0). Further, (x0, y5), (x1, y5), (x2, y5), (x3, y5), (x4, y5), (x6, y5), (x7, y5), (x8, y5), (x9, y5) and (x10, y5) are images formed by shifting laser beams for measuring left or right on the X axis from the hone position and separately irradiating these coordinate points with the laser beams for measuring.

Similarly, (x5, y0), (x5, y1), (x5, y2), (x5, y3), (x5, y4), (x5, y5), (x5, y6), (x5, y7), (x5, y8), (x5, y9) and (x5, y10) are images formed by shifting laser beams for measuring up or down on the Y axis and separately irradiating these coordinate points with the laser beams for measuring.

The area into which the laser beams for measuring emitted from the laser Doppler vibrometer of the vibration measurement section 2 are projected is the detection range of the structural deformation detecting device of the present embodiment.

Next, the detection processing of a crack is described with reference to the flowchart of Fig. 10.

First, as shown in Fig. 3, a measurement processing (Act 1-Act 3 shown in Fig. 5) is carried out using the structural deformation detecting device on concrete in integrity, and the result of the measurement is recorded in the memory 840 (Act 4 shown in Fig. 5).

In Act 11, a laser beam irradiation position is set as follows: m_max=10 (the maximum value on the X axis) and n_init=5 (the home position on the Y axis), then Act 12 is taken.

In Act 12, the semiconductor laser 402 emits laser beams, and then Act 13 is taken.

In Act 13, the coordinates (x, y) of a measurement point are set, and then Act 14 is taken.

In Act 14, the CPU 511 moves the mirror of the Galvano scanner 420 to the coordinate position (x10, y5) which is set as a position to be irradiated with the laser beams for measuring emitted from the laser Doppler vibrometer 820, and then Act 15 is taken. The laser beams are focused on the mirror surface of the Galvano scanner 420 by a lens 408 and sequentially reflected by the mirror surface and focused by a lens 430 onto the measurement point of the concrete. Through the operation, the vibration of the measurement point determined by coordinates (x10, y5) is measured.

In Act 15, the parametric speaker 800 is turned on to irradiate an irradiated position O1 with ultrasonic waves, then Act 16 is taken. The CPU 511 sets [0001 1111 1111] for the data line 513 (refer to Fig. 6) and [1] for the address line 515. Further, the drivers DRV00-DRV08 are activated by causing the clock lines 514 to generate a clock, thereby generating ultrasonic waves (the start of time measurement).

In Act 16, the transmission time t (xm, yn) taken for the transmission of ultrasonic vibration in the measurement point is acquired in Act 16, sequentially, Act 17 is taken to record the transmission time t in the memory 840, and then Act 18 is taken. The ultrasonic waves are transmitted in the surface of concrete while vibrating concrete and then are detected by the laser Doppler vibrometer immediately the ultrasonic waves reach the measurement position (x10, y5) of the laser Doppler vibrometer (the end of time measurement). The time measured is set as a transmission time t (x10, y5) and stored in the memory 840.

1 is subtracted from the X-axis coordinate position (m=m-1) in Act 18, and then Act 19 is taken.

The flow proceeds to Act 20 if the X-axis coordinate position is changed from x10 to x0 (m<0, Yes) in Act 19 or returns to Act 13 if m is greater than 0 (No) in Act 19.

In Act 20, whether or not the Y-axis coordinate position n is shorter than 0 is determined. the flow is ended if the Y-axis coordinate position n is shorter than 0 or proceeds to Act 21 if the coordinate position is greater than 0.

In Act 21, 1 is subtracted from the Y-axis coordinate position (n=n-1), and then Act 13 is taken.

That is, in Act 18-Act 21, the CPU 511 moves the irradiation position of the laser beams for measuring emitted from the laser Doppler vibrometer to a position determined by coordinates (x9, y5) with the Galvano scanner 420 and causes the semiconductor laser 402 to emit laser beams. The laser beams are concentrated on the mirror surface of the Galvano scanner 420 by the lens 408 and sequentially reflected by the mirror surface and converged by the lens 430 onto a measurement point on concrete. Through the operation, the vibration of the measurement point determined by coordinates (x9, y5) is measured.

As described above, ultrasonic waves are generated from the parametric speaker (the start of time measurement). The ultrasonic waves are transmitted in the surface of concrete while vibrating concrete and then are detected by the laser Doppler vibrometer immediately the ultrasonic waves reach the measurement position (x9, y5) of the laser Doppler vibrometer (the end of time measurement). The measured time T (x9, y5) is recorded in the memory 840.

Thereafter, the laser beams for measuring emitted from the laser Doppler vibrometer are moved to the following positions, the measured object is irradiated with the ultrasonic waves output from the parametric speaker, and the transmission time t (x, y) taken for the transmission of the ultrasonic waves from an ultrasonic wave irradiation position to the measurement position of the laser Doppler vibrometer is measured and stored in the memory.

The coordinate position is sequentially changed according to the sequence of (x10, y4) - (x0, y4), (x10, y3) - (x0, y3), (x10, y2) - (x0, y2), (x10, y1) - (x0, y1) and (x10, y0) - (x0, y0) after being changed as (x8, y5) - (x1, y5) in Act 18- Act 21.

Further, for the sake of convenience of description,the measurement point are set as the foregoing coordinates, however, it is not limited to this. The transmission time taken for the transmission of ultrasonic waves to a measurement point located on the line formed by connecting the vibration point (X0, y5) and a measurement point (X10, yn) may be measured and stored in the memory as long as the the position to which the mirror of the Galvano scanner 420 is moved can be indicated more detailedly.

The transmission time taken for the transmission of ultrasonic waves through concrete in integrity is measured through the foregoing operations.

In Fig. 9 and Fig. 10, ultrasonic vibration is generated in a measured object (the start of time measurement), and the vibration is detected by a laser Doppler vibrometer (the end of time measurement) when the vibration reaches a position (x10, y5) set as the measurement position of the laser Doppler vibrometer. The measured time t (x10, y5) is stored in the memory 840. In the case shown in Fig. 9, as there is a crack between x0 and x10, the measured time t is longer than the time T (x10, y5) measured in concrete in integrity (t (x10, y5) >T (x10, y5)). Thus, the CPU 511 determines the existence or absence of a crack according to the result of the comparison of the measured times.

To detect the specific position of the crack, the measurement point is moved to be close to the vibration point O1 to carry out the same operations. The measurement point is moved to (x9, y5).

The CPU 511 further causes the generation of ultrasonic waves (the start of time measurement). The ultrasonic waves are transmitted in the surface of concrete while vibrating concrete and are then detected by the laser Doppler vibrometer immediately the ultrasonic waves reach the measurement position (x9, y5) of the laser Doppler vibrometer (the end of time measurement). The measured time t (x9, y5) is stored in the memory 840. In the case shown in Fig. 10, as there is a crack between x0 and x9, the measured time t is longer than the measured time T (x9, y5) measured in concrete in integrity (t (x9, y5) >T (x9, y5)).

The foregoing measurement is repeated for measurement points (x8, y5), (x7, y5), (x6, y5), (x5, y5), (x4, y5), (x3, y5) and (x2, y5). In the present embodiment, the time measured at the point (x2, y5) is substantially equal to the reference time, thus, it is determined that the crack exists between the point (x3, y5) and the point (x2, y5).

Further, the measurement point of the laser Doppler vibrometer is sequentially moved to points in a sequence of (x10, y4), (x10, y3), (x10, y2), (x10, y3), (x10, y2), (x10, y1) and (x10, y0), and the same measurement is carried out for these points to detect the position of a crack.

### (Second Embodiment)

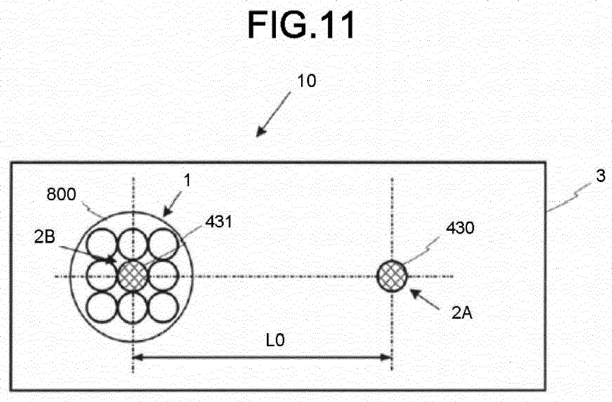

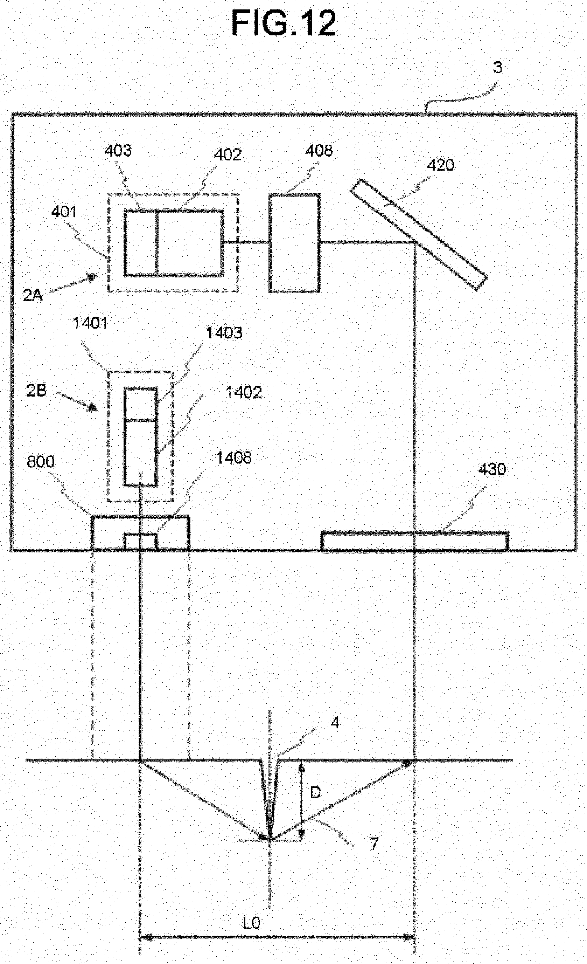

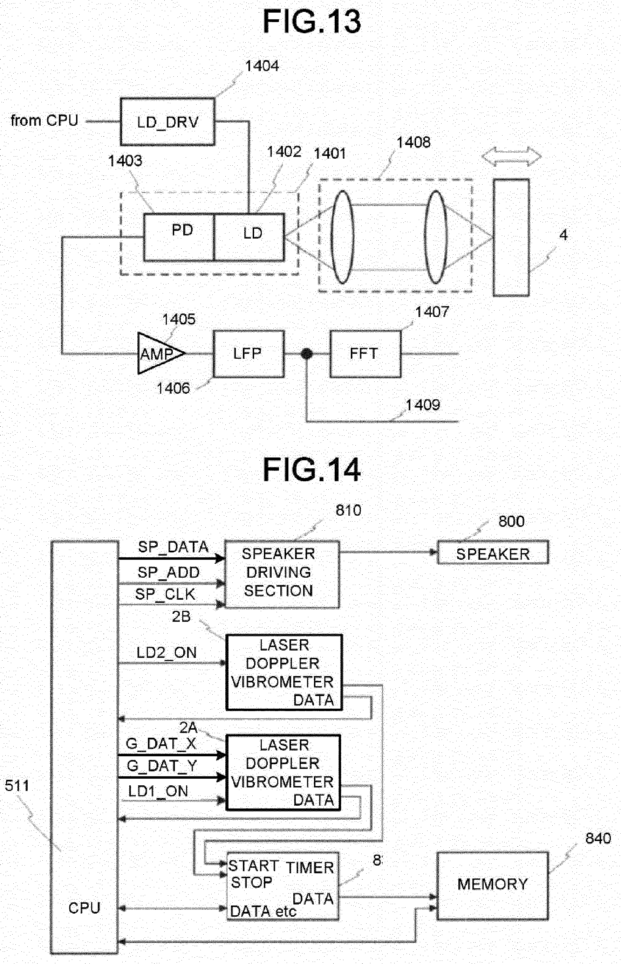

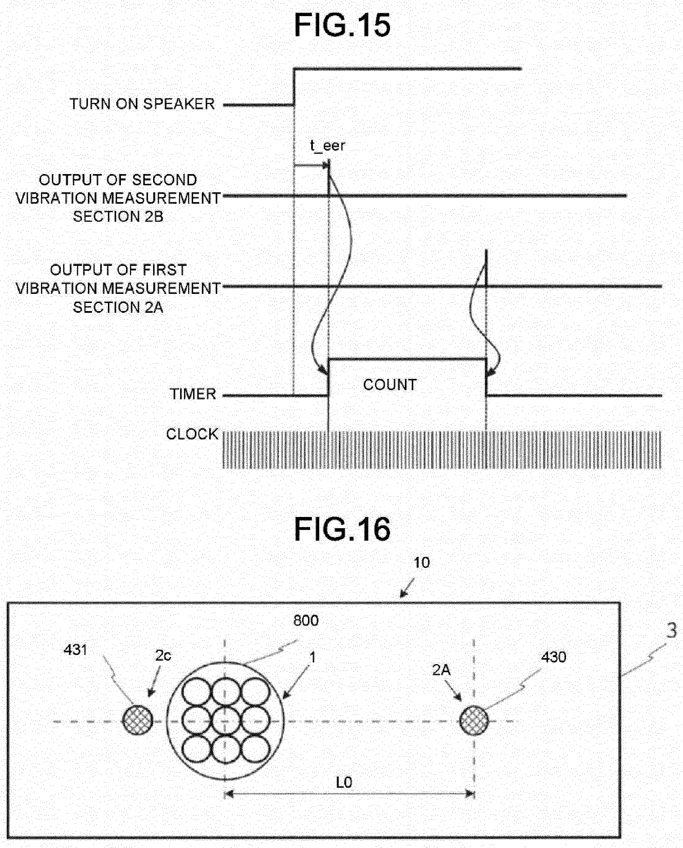

Fig. 11 is a schematic front view of a structural deformation detecting device according to the second embodiment; Fig. 12 illustrates a state in which a structure is deformed in a cross-sectional side view of the structural deformation detecting device shown in Fig. 11. Fig. 13 is a diagram illustrates the circuit of a self-mixing interferometry based laser Doppler vibrometer constituting the vibration measurement section shown in Fig. 11; Fig. 14 is a diagram illustrates the circuit of system of the structural deformation detecting device according to the second embodiment; Fig. 15 is a timing diagram of a deformation detection carried out in the second embodiment. Further, identical components shown in Fig. 12-Fig. 14 and Fig. 1-Fig. 4, Fig. 7 and Fig. 8 are denoted by identical reference signs and are therefore not described repeatedly.

A specific vibration measurement section for timing the start of time measurement is arranged in the second embodiment so that time is measured immediately the ultrasonic waves emitted from the vibration section 1 vibrate a measured object 4 such as concrete.

In this way, the time elapsing till the measured object 4 is vibrated by being irradiated with the ultrasonic wave, which mainly causes inaccuracy, is completely measured, thus achieving the high-precision measurement of a deformation such as a crack.

In Fig. 11, the vibration module 800 may be, a parametric speaker, a flat speaker, a loudspeaker, a gas gun, a shock tube or any device that can vibrate the measured object 4 in a non-contact manner. A parametric speaker is described below as an example of the vibration module 800 in the example.

As shown in Fig. 11, a lens section 430 serving as an incident and emitting port for the laser beams emitted from a two-dimensional laser Doppler vibrometer serving as a vibration measurement section 2 (hereinafter referred to as a first vibration measurement section 2A) is arranged on the front surface of the housing 3 of the structural deformation detecting device 10, similarly to the first embodiment. Further, a lens section 431 is arranged as an incident and emitting port for the laser beams emitted from a laser Doppler vibrometer serving as a second vibration measurement section 2B.

In the present embodiment, parametric speakers 800 constituting the vibration section 1 are arranged around the lens section 431 which is the incident and emitting port for the laser beams emitted from the laser Doppler vibrometer serving as the second vibration measurement section 2B. In this structure, the center part O1 of the ultrasonic waves emitted from the parametric speaker 800 is substantially coincident with the center part of the laser beams emitted from the laser Doppler vibrometer serving as the second vibration measurement section 2B. Thus, a vibration point on the surface of concrete, that is, the measured object 4 serving as the vibration object, can be measured by the laser Doppler vibrometer serving as the second vibration measurement section 2B.

The second vibration measurement section 2B shown in Fig. 12 and Fig. 13 is a self-mixing interferometry based laser Doppler vibrometer in the present embodiment. Self-mixing interferometry refers to a method for measuring the motion (vibration) of a measured object by making a laser beam output from a laser interfere with the scattered light received from a measured object inside the laser.

In Fig. 12 and Fig. 13, the laser beams emitted from a semiconductor laser 1402 are concentrated on the measured object 4 by an optical unit 1408. The concentrated laser beams are reflected by the measured object 4, and the scattered light is interfered inside the semiconductor laser 1402 through the optical path and then the interfered light is measured by a photodiode 1403 arranged inside the semiconductor laser. That is, a Doppler shift occurs if the measured object is vibrated in the direction indicated by an arrow shown in Fig. 13, and the frequency of the scattered light is also slightly changed. The scattered light is interfered with the original light (back beam) in the semiconductor laser 1402, and the interference is detected by a built-in photodiode 1403. If the interference is generated on the photodiode 1403, then the frequency difference is detected as a beat signal.

The semiconductor laser 1402 and the photodiode 1403 for a power monitor are arranged inside the semiconductor laser section 1401. The semiconductor laser 1402 is driven by a current driver 1404 with a constant current. The output from the photodiode 1403 serving as the monitoring diode is converted and amplified by a current-voltage conversion amplifier 1405 and then filtered by a low-pass filter 1406 to cut off noise of a high-frequency component. A signal 1409 that is a the beat signal is monitored to determine whether or not a Doppler shift occurs. Further, Fourier transformation is conducted using FFT 1407 to obtain a power spectrum of laser intensity.

On the other hand, a two-dimensional scanning laser Doppler vibrometer serving as the first vibration measurement section 2A is identical to the vibration measurement section 2 according to the first embodiment and is therefore not described here.

Fig. 14 is a diagram illustrating the system configuration of the structural deformation detecting device according to the second embodiment.

In the present embodiment, the measurement of a reference time in concrete in integrity and the actual measurement of a time in cracked concrete have features.

First, concrete or mortar is irradiated with the laser beams from the second vibration measurement section 2B.

Next, a measured object 4 made of concrete or mortar is irradiated with the ultrasonic waves emitted from the speaker 800 of the vibration section 1. That is, the CPU 511 sets [0000 1111 1111] for the data line 513 and [1] for the address line 515. Further, a clock is generated by the clock line to generate ultrasonic waves. The emitted ultrasonic waves reaches concrete to vibrate concrete.

At this time, the second vibration measurement section 2B detects the vibration of concrete and outputs a measurement start signal 1409 to the timer 830. The timer 830 receiving the measurement start signal 1409 starts timing for a reference clock.

The ultrasonic waves emitted from the vibration section 1 towards concrete is transmitted in the surface of concrete and is then detected by the laser Doppler vibrometer serving as the first vibration measurement section 2A immediately the ultrasonic waves reach a measurement position of the laser Doppler vibrometer. After detecting the vibration of concrete, the first laser Doppler vibrometer 2A outputs a measurement start signal 1409 to the timer 830. The timer 830 stops timing after receiving the measurement start signal 1409 and records the obtained time in the memory 840.

Fig. 15 is a timing diagram of the foregoing detection. A signal for starting the irradiation of concrete with the ultrasonic waves emitted from the vibration section 1 is input to a driver to practically start an ultrasonic oscillation; an error (t_err) is likely to occur before the ultrasonic oscillation reaches concrete. For example, there is an error in the start time of each of the piezoelectric transducers 801 constituting the parametric speaker 800.

However, the second vibration measurement section 2B detects the moment the vibrated object, that is, concrete, is vibrated by the ultrasonic waves emitted from the vibration section 1 and starts time measurement based on the timer 840, thus, an error-free high-precision time measurement can be realized. Thus, a high-precision measurement can be carried out concerning a reference time and an actual crack to detect a crack at high precision.

### (Third Embodiment)

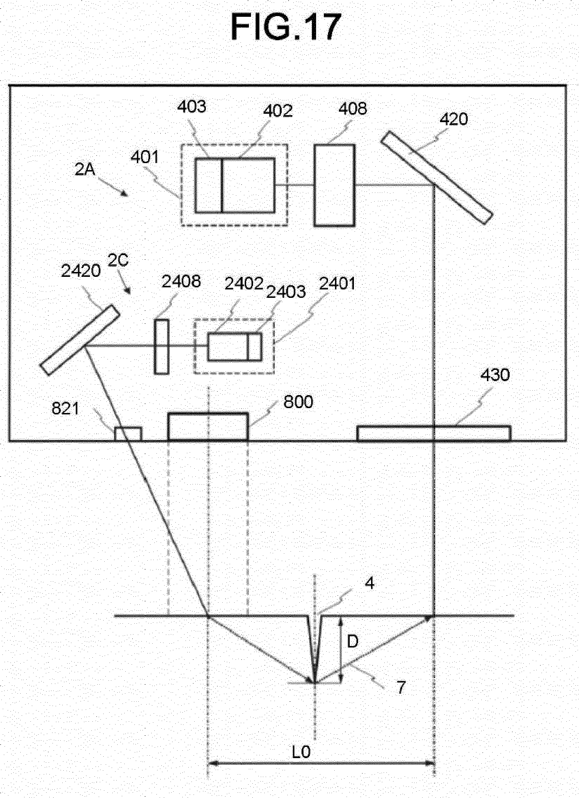

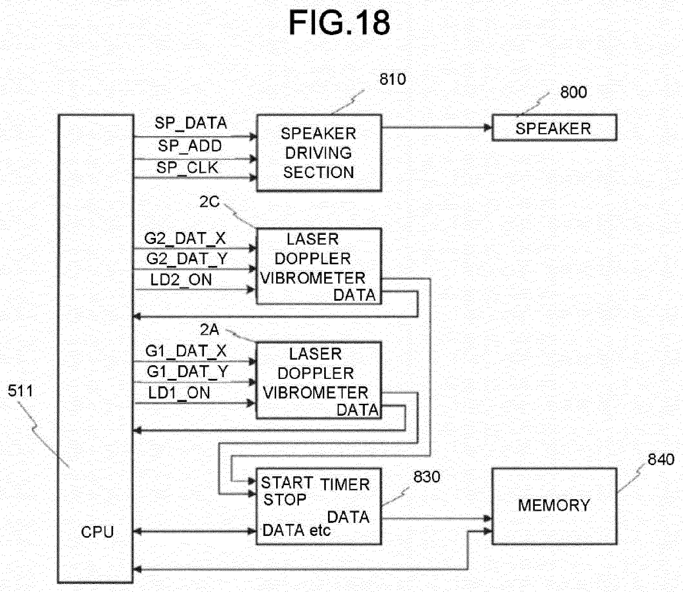

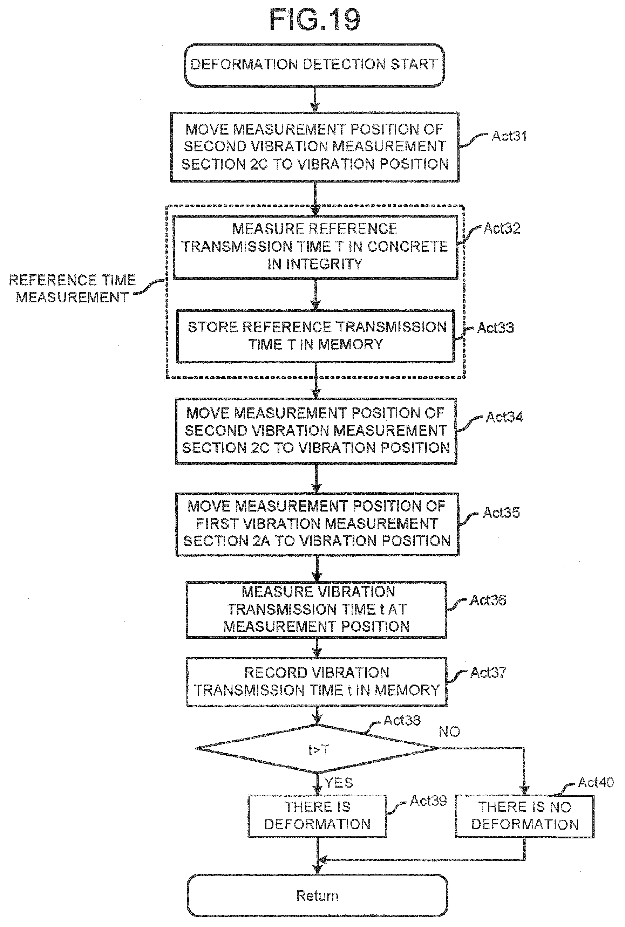

Fig. 16 is a schematic front view of a structural deformation detecting device according to the third embodiment; Fig. 17 illustrates a state in which a structure is deformed in a cross-sectional side view of the structural deformation detecting device shown in Fig. 16. Fig. 18 is a diagram illustrating the system configuration of a structural deformation detecting device according to the third embodiment; Fig. 19 is a flowchart illustrating the procedures of the detection operation of the structural deformation detecting device shown in Fig. 16.

The third embodiment is a variation of the second embodiment.

Fig. 16 is a schematic front view of a structural deformation detecting device according to the third embodiment. Fig. 17 is a diagram illustrating a state in which a structure is deformed in a cross-sectional side view of the structural deformation detecting device shown in Fig. 16. Fig. 18 is a diagram illustrating the system configuration of a structural deformation detecting device according to the third embodiment. Fig. 19 is a flowchart illustrating the basic procedures of the detection operation of the structural deformation detecting device shown in Fig. 16.

Similarly to the second embodiment, in the third embodiment, the vibration caused by the vibration section 1 at a vibration point O1 on the measured object 4 is detected by a second vibration measurement section 2C. However, in the third embodiment, similarly to the first vibration measurement section 2A, the second vibration measurement section 2C is provided with a Galvano scanner 2420. The center of the lens 431 of the second vibration measurement section 2C is arranged at a position different from the position of the center (the output center O1 of the speaker 800) vibrated by the speaker 800 of the vibration section 1. Further, the components of the second vibration measurement section 2C which are identical to corresponding components of the first vibration measurement section 2A are denoted in Fig. 17 by reference signs which are merely different from corresponding reference signs of the first vibration measurement section 2A in being started with an additional number 2. Further, the identical components shown in Fig. 14 and Fig. 18 which are denoted by the same reference signs are not described here repeatedly.

In the configuration shown in Fig. 17, to measure a vibration point, the second vibration measurement section 2C is a two-dimensional scanning laser Doppler vibrometer. That is, an operation of controlling the mirror of the Galvano scanner 2420 is added to coincide with the measurement position of the second vibration measurement section 2C before an operation of measuring a reference time and an operation of measuring a deformation (e.g. crack). Through the measurement operation, the second vibration measurement section 2C detects the moment when concrete is vibrated by the vibration section 1 and outputs a measurement start signal to the timer 830. Subsequent operations are described above and are therefore not described below.

In Fig. 18, similar to the first vibration measurement section 2A, the CPU 511 inputs, for the second vibration measurement section 2C, a signal to move the mirror of the Galvano scanner 2420 to a specific coordinate position.

The procedures of the detection operation of the structural deformation detecting device shown in Fig. 16 is described below with reference to the flowchart shown in Fig. 19.

In Act 31, the mirror of the Galvano scanner 2420 of the second vibration measurement section 2C is moved to a vibration position of the measured object 4 vibrated by the vibration section 1, and then Act 32 is taken.

In Act 32, the vibration section 1 vibrates concrete in integrity, and a reference transmission time T is measured by the first vibration measurement section 2A, and then Act 33 is taken. It is set that concrete in integrity exists in the measured object 4. Thus, the second vibration measurement section 2C causes the mirror of the Galvano scanner 2420 to face concrete in integrity to irradiate concrete in integrity with laser beams. In this case, the distance between an irradiation position irradiated with laser beams and a vibration point which are set for the measurement of a reference transmission is calculated in advance. In this way, a reference transmission time T is calculated.

The measured reference transmission time T is recorded in the memory 840 in Act 33, and then Act 34 is taken.

In Act 34, the measurement position of the second vibration measurement section 2C is moved to the vibration position vibrated by the vibration section 1, and then Act 35 is taken.

In Act 35, the Galvano scanner 420 of the first vibration measurement section 2A is driven to shift the irradiation position to the measurement position (vibration measurement position), and then Act 36 is taken.

In Act 36, the time t for the transmission of vibration to the measurement position (vibration measurement position) is measured in Act 36, and then Act 37 is taken.

In Act 37, the vibration transmission time t is recorded in the memory 840, and then Act 38 is taken.

In Act 38, the vibration transmission time t is compared with the reference transmission time T. If the vibration transmission time t is longer than the reference transmission time T in Act 38, then the existence of the state shown in Fig. 4 is speculated, thus, it is determined in Act 39 that there is a deformation, and a measurement for the next measurement position is executed. Further, if the vibration transmission time t is shorter than the reference transmission time T in Act 38, then it is determined in Act 40 that there is no deformation, and a measurement for the next measurement position is executed.

According to the present embodiment, a reference vibration transmission time T is measured through the operations of the second vibration measurement section 2C and the vibration section 1. Thus, the reference vibration transmission time T can be measured using concrete in integrity contained in the measured object 4.

In the first to third embodiments, the first vibration measurement section 2A and the second vibration measurement section 2C are both provided with a Galvano scanner (420) 2420 which can emit laser beams towards any position on the measured object 4 by rotating the mirror thereof around the X axis and the Y axis orthogonal to the X axis.

Further, in each of the foregoing embodiments, the vibration section 1 and the vibration measurement sections 2, 2A, 2B or 2C are arranged inside the housing 3 which takes the shape of, for example, a box or a frame.

That is, the vibration detecting device comprises:
(1): a laser section configured to irradiate a measured object with laser beams emitted from a semiconductor laser and detect, using a photodiode, the interference of the original light in the semiconductor laser with reflected laser beams; a reflecting mirror configured to irradiate the measured object with the laser beams from the laser section and cause the laser beams reflected by the measured object to enter the semiconductor laser; and a driver section configured to control the orientation of the reflecting mirror to irradiate any position on the measured object with the laser beams emitted from the semiconductor laser; and
(2): in the vibration detecting device described in (1), a determination section configured to determine that the detection of vibration which is generated in the measured object if interference is detected by the photodiode.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and spirit of the invention.

## Claims

1. A structural deformation detecting device, comprising:
a housing comprising a vibration section and a vibration measurement section that are arranged at a specific interval, the vibration measurement section comprising at least a first vibration measurement section;
the vibration section being configured to vibrate a specific vibration position on a structure serving as an object to be measured in a non-contact manner;
the first vibration measurement section being configured to detect the vibration generated in the object to be measured from any position in a non-contact manner; and
a time measurement section configured to measure the time elapsing till the vibration of the object to be measured caused by the vibration section is detected by the first vibration measurement section.

2. The structural deformation detecting device according to claim 1, further comprising:
a second vibration measurement section configured to detect the generation of vibration by the vibration section at a specific vibration position on a structure in a non-contact manner, wherein
the time measurement section starts measuring time when the vibration is detected by the second vibration measurement section and stops measuring time if the vibration is detected by the first vibration measurement section.

3. The structural deformation detecting device according to claim 2, wherein
the second vibration measurement section has a center of the vibration measurement point thereof and the vibration section has a vibration center thereof, and the center of the vibration measurement point of the second vibration measurement section is configured to be arranged on the same axial line with the vibration center of the vibration section.

4. The structural deformation detecting device according to claim 2 or 3, wherein
the second vibration measurement section is configured to be moved between a first position coincident with the vibration point of the vibration section and a second position spaced from the first position by a specific distance, and if the vibration measurement point is at the second position, the second vibration measurement section is configured to detect the vibration at the vibration point to measure a reference vibration transmission time.

5. The structural deformation detecting device according to any one of claims 1 to 4, wherein
the at least a first vibration measurement section comprises a laser Doppler vibrometer.

6. A method for detecting a deformation of a structure, comprising the steps of:
- providing a housing comprising a vibration section and a vibration measurement section that are arranged at a specific interval, the vibration measurement section comprising at least a first vibration measurement section;
- vibrating, by the vibration section, a specific vibration position on a structure serving as an object to be measured in a non-contact manner;
- detecting the vibration generated in the object to be measured from any position in a non-contact manner by the first vibration measurement section; and
- measuring the time elapsing till the vibration of the object to be measured caused by the vibration section is detected by the first vibration measurement section.

7. The method according to claim 6, further comprising the step of:
- providing a second vibration measurement section;
- detecting, by the second vibration measurement section, the generation of vibration by the vibration section at a specific vibration position on a structure in a non-contact manner, wherein
- starting measuring time when the vibration is detected by the second vibration measurement section; and
- stopping measuring time if the vibration is detected by the first vibration measurement section.

8. The method according to claim 6 or 7, further comprising the step of:
- defining a center of the vibration measurement point of the second vibration measurement section and a vibration center of the vibration section; and
- arranging the center of the vibration measurement point of the second vibration measurement section on the same axial line with the vibration center of the vibration section.

9. The method according to claim 7 or 8, further comprising the step of:
- moving the second vibration measurement section between a first position coincident with the vibration point of the vibration section and a second position spaced from the first position by a specific distance, and
- detecting, the second vibration measurement section, the vibration at the vibration point to measure a reference vibration transmission time, if the vibration measurement point is at the second position.

10. The method according to any one of claims 6 to 9, wherein the step of providing the first vibration measurement section comprised in the housing comprises providing a laser Doppler vibrometer.

11. The use of the structural deformation detecting device according to any one of claims 1 to 5, for detecting a deformation in a structure in a non-contact manner.

12. The use according to claim 11, wherein the structure has a surface made of concrete.
